# EUROPÄISCHE PATENTSCHRIFT

(11) **EP 3 020 468 B1**
(45) Veröffentlichungstag und Bekanntmachung des Hinweises auf die Patenterteilung: **03.07.2019**
(21) Anmeldenummer: 15183535.2
(22) Anmeldetag: 02.09.2015
(51) Int. Cl.: B01D 53/75, B01D 53/96, C04B 7/36, B01D 53/50, B01D 53/64

(54) **VERFAHREN ZUR VERMINDERUNG EINES SCHADSTOFFGEHALTS EINES BEI EINER THERMISCHEN BEHANDLUNG EINES MATERIALS ENTSTEHENDEN ODER GENUTZTEN ABGASSTROMS**
METHOD FOR REDUCING POLLUTANTS IN AN EXHAUST GAS FLOW THAT IS CAUSED OR USED DURING A THERMAL TREATMENT OF A MATERIAL
PROCÉDÉ DE RÉDUCTION D'UNE TENEUR EN SUBSTANCE NOCIVE D'UN FLUX DE GAZ D'ÉCHAPPEMENT UTILISÉ OU GÉNÉRÉ LORS D'UN TRAITEMENT THERMIQUE D'UN MATÉRIAU

(30) Priorität: 12.11.2014 DE 102014116532
(43) Veröffentlichungstag der Anmeldung: 18.05.2016
(73) Patentinhaber: thyssenkrupp AG, 45143 Essen (DE); thyssenkrupp Industrial Solutions AG, 45143 Essen (DE)
(72) Erfinder: Rohloff, Kathrin, 20457 Hamburg (DE); Stender, Timo, 58730 Fröndenberg (DE)
(74) Vertreter: thyssenkrupp Intellectual Property GmbH

(56) Entgegenhaltungen:
- EP-A1- 1 574 487
- EP-A1- 2 586 753
- EP-A1- 2 604 586
- JP-A- 2007 031 188
- JP-A- 2010 076 973
- JP-A- 2012 187 458

## Beschreibung

Die Erfindung betrifft ein Verfahren zur Verminderung eines Schadstoffgehalts eines bei einer thermischen Behandlung eines Materials entstehenden oder genutzten Abgasstroms. Insbesondere betrifft die Erfindung ein Verfahren zur Verminderung des Schwefel- und/oder Quecksilbergehalts eines bei einer Zementherstellung entstehenden Abgases, wobei der Schadstoff in Form von Schwefel und/oder Quecksilber vorliegt.

Bekannt ist, dass Schwefel in Abgasen der Zementindustrie durch Eindüsung kalkhaltiger Sorbentien, wie beispielsweise Calciumhydroxid, gemindert werden können. Die kalkhaltigen Sorbentien werden in den Abgasstrom eingedüst, reagieren dort mit Schwefeldioxid und Schwefeltrioxid des Abgases zu Calciumsulfit und Calciumsulfat, welche nachfolgend im Vorwärmer in das Ofenmehl eingebunden oder an einem Filter abgeschieden werden. Hierfür sind eine bestimmte Verweilzeit und eine ausreichende Vermischung erforderlich. Entscheidend für hohe Abscheidegrade sind außerdem die Abgastemperatur, die Abgasfeuchte und die Konzentration von Chlor im Abgas. Chlor besitzt nämlich hygroskopische Eigenschaften und kann dadurch den Abscheidegrad für Calciumsulfit und Calciumsulfat erhöhen.

Im Rahmen der Herstellung von Zement kann weiterhin eine Schwefeleinbindung am Rohmaterial in der Rohmühle erfolgen. Auch hier kann die Einbindung durch eine Steigerung der Chlorkonzentration erhöht werden.

Ein Einbringen von Chlor in Abgase der Zementindustrie ermöglicht zudem, eine Abscheidung von Quecksilber zu erhöhen. Durch eine Oxidation von elementarem Quecksilber zu Quecksilberchlorid kann nämlich die Neigung zur Adsorption an Feststoffpartikeln, wie Filterstaub, Rohmehl oder anderen Sorbentien, gesteigert werden.

In den aus einem (Ofenmehl-)Vorwärmer austretenden Abgasen einer Anlage zur Zementherstellung ist in der Regel kein Chlor enthalten, da das in dem Klinkerofen bei hohen Temperaturen freigesetzte Chlor bereits wieder in dem in Strömungsrichtung des Abgases dem Klinkerofen nachgeschalteten Vorwärmer eingebunden wird. Dadurch wird ein Chlorkreislauf zwischen Klinkerofen und Vorwärmer ausgebildet, der zu einer kontinuierlichen Erhöhung des Chlorgehalts führen könnte. Um diesen Chlorkreislauf zu entlasten ist regelmäßig ein Abgasbypass im Klinkerofenabzug, d.h. im Bereich des Übergangs zwischen Klinkerofen und Vorwärmer, vorgesehen. Über den Abgasbypass wird ein Teilstrom des Abgasstroms abgezweigt und anschließend gequencht und an einem Filter entstaubt. Hierbei wird das enthaltende Chlor nahezu vollständig an dem im Filter anfallenden Bypassstaub eingebunden. Der belastete Bypassstaub ist aufgrund der Verunreinigung mit Chlor und anderen Schadstoffen, wie beispielsweise Alkalien und Schwermetallen, in der Regel aus dem Zementherstellungsprozess auszuschleusen. Die Aufbereitung des Bypassstaubs rückt dabei in den Fokus vieler Betreiber von Zementanlagen, da durch diesen neben einem Materialverlust Entsorgungskosten entstehen.

Eine Aufbereitung des Bypassstaubs kann in Form einer Wäsche mit chemischen und mechanischen Stufen erfolgen. Schadstoffe, wie beispielsweise Chlor und Schwermetalle, werden dabei in verschiedenen Stufen aus dem Bypassstaub entfernt. Verfahren zur Behandlung von Bypassstaub sind beispielsweise in der WO 2012/142638 A1 und der WO 2013/113664 A1 veröffentlicht.

Die JP 2007 031188 A offenbart ein Verfahren, bei dem ein kleiner Teilstrom von ca. 2% des Abgases eines Klinkerofens in einem Vorwärmer mittels einer Sonde abgezogen und dann abgekühlt wird, wobei sich chlorhaltige Verbindungen an dem im Abgasteilstrom enthaltenen Staub anlagern. Dieser Staub wird anschließend in einem Filter herausgefiltert und gesteuert, ggf. unter Zwischenschaltung eines Silos, wieder mittels der Sonde in den abgezweigten Abgasteilstrom eingebracht. Dabei scheint dieser mit chlorhaltigen Verbindungen angereicherte Staub dazu genutzt zu werden, eine verbesserte Entschwefelung des abgezweigten Abgasteilstroms zu erreichen, der anschließend wohl wieder mit dem Abgashauptstrom vermischt wird.

Ausgehend davon lag der Erfindung die Aufgabe zugrunde, den Schwefel- und/oder Quecksilbergehalt eines bei einer Herstellung von Zement entstehenden Abgases auf möglichst vorteilhafte Weise zu vermindern.

Diese Aufgabe wird durch ein Verfahren gemäß dem Anspruch 1 gelöst. Vorteilhafte Ausführungsformen davon sind Gegenstände der weiteren Ansprüche und ergeben sich aus der nachfolgenden Beschreibung der Erfindung.

Ein erfindungsgemäßes Verfahren zur Verminderung eines Schadstoffgehalts eines bei einer thermischen Behandlung eines Materials entstehenden oder genutzten chlorhaltigen Abgasstroms durch Abscheiden des Schadstoffs (oder eines den Schadstoff umfassenden Bestandteils des Abgases), wobei der Schadstoff in Form von Schwefel und/oder Quecksilber vorliegt und wobei
- der chlorhaltige Abgasstrom in einen Hauptstrom und einen Teilstrom geteilt wird,
- zumindest ein Teil des Chlors aus dem Abgas des Hauptstroms abgeschieden wird, und
- anschließend der Gehalt des Schadstoffs in dem Hauptstrom durch Abscheidung verringert wird, wobei
- in den Hauptstrom ein chlorhaltiger Zuschlagstoff eingebracht wird, um eine Erhöhung des Abscheidegrads bei der Abscheidung des Schadstoffs zu erreichen,
ist dadurch gekennzeichnet, dass der Teilstrom, vorzugsweise nach einem Quenchen, gefiltert wird, wobei ein bei der Filterung aus dem Teilstrom abgeschiedener Filterkuchen zumindest teilweise als chlorhaltiger Zuschlagstoff wieder dem abgekühlten Hauptstrom zugeführt wird.

Die Bezeichnungen "Teilstrom" und "Hauptstrom" sind nicht zwingend dahingehend auszulegen, dass der Mengenstrom des Teilstroms kleiner als derjenige des Hauptstroms des Abgases ist.

Das Abzweigen des Teilstroms erfolgt vorzugsweise bei einer Temperatur des Abgases, bei der das Chlor im Abgas noch möglichst weitgehend gasförmig vorhanden ist.

Der Begriff "Filtern" soll erfindungsgemäß alle Abscheideverfahren umfassen, durch die mindestens ein Bestandteil und insbesondere Partikel aus dem Abgas abgetrennt werden können. Das Filtern kann insbesondere auf einem Siebeffekt und/oder einer Trägheit der herauszufilternden Partikel beruhen. Der Begriff "Filterkuchen" soll erfindungsgemäß allgemein den aus dem Abgas abgeschiedenen Bestandteil bezeichnen.

Das Abscheiden des Chlors aus dem Hauptstrom kann insbesondere aus einer im Rahmen der thermischen Behandlung des Materials erfolgenden Abkühlung des Hauptstroms resultieren. Dabei kann das Chlor insbesondere in das Material eingebunden werden.

Ein Abscheiden des Schadstoffs kann vorzugsweise mittels eines (ein- oder mehrstufigen) Abgasfilters erfolgen. Ein Einbringen des chlorhaltigen Zuschlagstoffs in den Hauptstrom des Abgasstroms erfolgt dann vor dem Abgasfilter. Ein in dem Abgasfilter anfallender Filterkuchen wird vorzugsweise zumindest teilweise ausgeschleust.

Durch das erfindungsgemäße Verfahren wird ermöglicht, Chlor, das in relevantem Umfang in dem Teilstrom vorhanden ist, da dieser vor dem Abkühlen des Hauptstroms und der dadurch bedingten Abscheidung des Chlors an insbesondere dem thermisch zu behandelnden Material selbst abgezweigt wird, für die Unterstützung der Schadstoffverminderung des abgekühlten (und daher kein oder wenig Chlor umfassenden) Abgases des Hauptstroms zu nutzen. Das (vorzugsweise vorgesehene) Quenchen und das Filtern des Abgases des Teilstroms dient dabei einer Aufkonzentration des Chlors beziehungsweise der chlorhaltigen Bestandteile des Teilstroms des Abgasstroms.

In einer bevorzugten Ausführungsform des erfindungsgemäßen Verfahrens kann dieses (u.a.) dazu dienen, den Schwefelgehalt des Abgasstroms zu vermindern. Dazu kann vorgesehen sein, dass durch ein Einbringen eines calciumhaltigen Zuschlagstoffs in den Hauptstrom eine Reaktion von Schwefeldioxid und/oder Schwefeltrioxid im Abgasstrom zu Calciumsulfit und/oder Calciumsulfat ermöglicht wird und anschließend das Calciumsulfit und/oder Calciumsulfat aus dem Hauptstrom abgeschieden wird, wobei die erfindungsgemäß erreichte Erhöhung des Chlorgehalts im Abgas die Abscheiderate für das Calciumsulfit und/oder das Calciumsulfat erhöht. Als calciumhaltiger Zuschlagstoff kann vorzugsweise ein calciumhaltiges Sorbens, wie beispielsweise Calciumhydroxid, genutzt werden.

Ein an dem Abgasfilter abgeschiedener, den Schadstoff umfassender Filterkuchen kann ganz oder teilweise wiederverwendet werden, um noch nicht umgesetzten calciumhaltigen Zuschlagstoff zu nutzen und dadurch den Wirkungsgrad des Verfahrens zu erhöhen. Dieser wiederverwendete (Teil des) Filterkuchen(s) umfasst dann auch zumindest einen Teil des chlorhaltigen Zuschlagstoffs, der somit ebenfalls wiederverwendet werden kann. Dadurch kann die einzusetzende Menge an chlorhaltigem Zuschlagstoff gering gehalten werden.

In einer bevorzugten Ausführungsform des erfindungsgemäßen Verfahrens kann dieses (u.a.) dazu dienen, den Quecksilbergehalt des Abgasstroms zu vermindern. Dabei kann durch das Einbringen des chlorhaltigen Zuschlagstoffs eine Reaktion von Quecksilber zu Quecksilberchlorid bewirkt werden. Dadurch kann eine Abscheiderate bei einem sich anschließenden Abscheiden des Quecksilberchlorids aus dem Hauptstrom erhöht werden.

Eine bevorzugte Anwendung des erfindungsgemäßen Verfahrens liegt in der Behandlung von Abgas, das bei der Herstellung von Zement entsteht. Dabei kann vorgesehen sein, dass im Rahmen einer Zementklinkerherstellung (als Teilschritt bei der Herstellung von Zement) Ofenmehl vorgewärmt und zu dem Zementklinker gebrannt wird, wobei (zumindest) ein Hauptstrom eines hinsichtlich des Schadstoffgehalts zu vermindernden Abgasstroms, der bei dem Brennen des Zementklinkers entsteht, zur Vorwärmung (und gegebenenfalls auch Calcination) des Ofenmehls genutzt wird. Durch das Vorwärmen des Ofenmehls, das beispielsweise in einem grundsätzlich bekannten, einem Klinkerofen vorgeschalteten Zyklonvorwärmer erfolgen kann, wird das Abgas abgekühlt, was zu einem zumindest teilweisen, insbesondere weitgehenden Abscheiden des Chlors und einer Einbindung an das Ofenmehl führt. Durch ein Zuführen des aus dem (im sogenannten Abgasbypass geführten) abgezweigten Teilstrom des Abgasstroms gewonnenen chlorhaltigen Zuschlagstoffs kann der Chlorgehalt im Abgas des Hauptstroms stromab der Vorwärmung des Ofenmehls und damit eine Abscheiderate für Schwefel und/oder Quecksilber erhöht werden.

Weiterhin kann vorgesehen sein, dass im Rahmen der Zementklinkerherstellung ein oder mehrere Rohmaterialien zu dem Ofenmehl verarbeitet (und insbesondere gemahlen) werden, wobei ein Hauptstrom eines hinsichtlich des Schadstoffgehalts zu vermindernden Abgasstroms zum Trocknen der Rohmaterialien im Rahmen der Verarbeitung zum Ofenmehl genutzt wird. Auch hier kann durch ein Zuführen des aus dem Teilstrom des Abgasstroms gewonnenen chlorhaltigen Zuschlagstoffs der Chlorgehalt in dem für das Trocknen genutzten Hauptstrom und damit ein Abscheidegrad für Schwefel und/oder Quecksilber und deren Einbindung an den Rohmaterialien oder dem Ofenmehl erhöht werden.

Die erfindungsgemäße Erhöhung des Chlorgehalts im Abgasstrom kann insbesondere bei einer Kombination des erfindungsgemäßen Verfahrens vorteilhaft sein, bei der zumindest ein Teil des bei dem Brennen des Zementklinkers entstehenden und zur Vorwärmung des Ofenmehls genutzten Hauptstroms des Abgasstroms zusätzlich zum Trocknen der Rohmaterialien genutzt wird, weil dann der auch zum Trocknen der Rohmaterialien genutzte Hauptstrom aufgrund der Abkühlung bei der Vorwärmung des Ofenmehls und der sich dadurch ergebenden Abscheidung des zuvor enthaltenen Chlors grundsätzlich (d.h. ohne das erfindungsgemäße Einbringen eines chlorhaltigen Teils des Teilstroms des Abgasstroms) eine nur sehr geringe Chlorkonzentration aufweisen würde.

Neben einer Anwendung des erfindungsgemäßen Verfahrens im Rahmen einer Zementherstellung sind auch andere Anwendungen, insbesondere in den Bereichen der Kalk- und Mineralsindustrie möglich.

In einer Ausführungsform des erfindungsgemäßen Verfahrens kann vorgesehen sein, dass der bei der Filterung des Teilstroms des Abgasstroms anfallende Filterkuchen in einen Feinanteil und einen Grobanteil separiert wird, wobei der Feinanteil zumindest teilweise wieder dem Hauptstrom des Abgasstroms zugeführt wird. Dadurch kann ausgenutzt werden, dass Chlor und auch andere Schadstoffe vorrangig in Feinfraktionen von in dem Teilstrom des Abgasstroms enthaltenem Staub enthalten ist. Durch das Separieren kann somit eine weitere Aufkonzentration des Chlors erreicht werden. Das Separieren des Filterkuchens kann sowohl im Rahmen der Filterung selbst als auch danach erfolgen. Das Separieren des Filterkuchens in Fein- und Grobfraktionen kann beispielsweise nach einer typischen trockenen Entstaubungsstufe durch Sichtung des gesamten Teilstroms des Abgasstroms erfolgen. Die Trennung der Fraktionen kann auch in unterschiedlichen Filtern oder Filterkammern erfolgen. Beispielsweise kann in einem zur Führung des Teilstroms des Abgasstroms vorgesehenen Abgasbypass ein Zyklon und/oder ein Elektrofilter zur Abscheidung der Grobfraktion vorgesehen sein, dem/denen in Strömungsrichtung des Teilstroms ein Nassfilter zur Abscheidung der Feinfraktion folgt. Weiterhin können mehrere Abscheider auch in unterschiedlichen Temperaturbereichen betrieben werden. Nach einer Abscheidung der Grobfraktion kann dabei eine Temperaturabsenkung für die nachfolgende Abscheidung der Feinfraktion vorgesehen sein.

Eine Abscheidung von Chlor im Rahmen der Filterung des Teilstroms des Abgasstroms kann bei Bedarf durch eine Zugabe eines Sorbens, insbesondere eines caliumhaltigen Sorbens, verbessert werden.

In einer bevorzugten Ausführungsform des erfindungsgemäßen Verfahrens kann vorgesehen sein, dass der Filterkuchen, insbesondere der Feinanteil des Filterkuchens, mit Wasser behandelt und insbesondere vermischt wird. Die so erreichte Ausbildung einer Suspension kann ein Einbringen des Filterkuchens oder eines Teils davon in den Hauptstrom des Abgasstroms durch beispielsweise ein Eindüsen vereinfachen/verbessern. Zudem kann dadurch die Ausbildung eines nicht nur chlorhaltigen sondern auch calciumhaltigen Zuschlagstoffs erreicht werden, der vorteilhaft für die Anwendung des erfindungsgemäßen Verfahrens zur Verminderung des Schwefelgehalts des Abgasstroms vorgesehen sein kann, da der Filterkuchen des Teilstroms des Abgasstroms, zumindest bei einer Anwendung des erfindungsgemäßen Verfahrens im Rahmen der Zementherstellung, zu einem großen Teil aus Calcium bestehen kann. Ein zusätzliches Einbringen eines calciumhaltigen Zuschlagstoffs in den Abgasstrom kann dadurch unterbleiben oder reduziert werden.

Eine Filterung des Teilstroms des Abgasstroms kann vorteilhaft mittels eines Nassabscheiders, beispielsweise mittels eines Nasselektrofilters, erfolgen. In Nassabscheidern werden die Abgastemperatur und das Abgasvolumen durch Eindüsung von Wasser bis zum Erreichen des Taupunkts gesenkt. Dadurch wird in einem Prozess sowohl eine Filterung des Teilstroms des Abgasstroms als auch ein Vermischen des Filterkuchens mit Wasser zur Ausbildung einer Suspension ermöglicht.

Ein Vermischen des Filterkuchens mit Wasser ermöglicht weiterhin, den wässerigen Filterkuchen wieder zu entwässern (d.h. darin enthaltenes Wasser zumindest teilweise und vorzugsweise möglichst vollständig zu entfernen; z.B. mittels eines Vakuumbandtrockners oder einer Filterpresse), um daraus einerseits einen ersten (zumindest teilweise) entwässerten Bestandteil und andererseits chlorhaltiges Prozesswasser zu gewinnen. Dabei wird ausgenutzt, dass Chlor und auch Alkalien gut wasserlöslich sind. Das chlorhaltige Prozesswasser kann dann zumindest teilweise als chlorhaltiger Zuschlagstoff wieder dem Hauptstrom des Abgasstroms zugeführt werden. Dadurch kann eine weitere Aufkonzentration des Chlors für das Einbringen in den Abgasstrom erreicht werden. Auch lässt sich das Prozesswasser als Flüssigkeit vorteilhaft in den Hauptstrom des Abgasstroms einbringen.

Insbesondere dann, wenn durch das erfindungsgemäße Verfahren (u.a.) eine Verminderung des Schwefelgehalts des Abgasstroms erreicht werden soll, kann vorgesehen sein, dass dem Prozesswasser, das dem Hauptstrom des Abgasstroms zugeführt wird, (wieder) ein calciumhaltiger Zuschlagstoff zugesetzt wird, um im Hauptstrom des Abgasstroms die gewollte Reaktion von Schwefeldioxid und/oder Schwefeltrioxid zu Calciumsulfit und/oder Calciumsulfat zu ermöglichen oder zu verbessern.

In einer weiterhin bevorzugten Ausführungsform des erfindungsgemäßen Verfahrens kann vorgesehen sein, dass der entwässerte Bestandteil mit dem Material vermischt wird. Bei einer Anwendung des erfindungsgemäßen Verfahrens im Rahmen der Zementherstellung kann der entwässerte Bestandteil insbesondere mit dem Ofenmehl vermischt oder dem Produkt in beispielsweise einer Zementmühle zugesetzt werden.

Weiterhin kann vorgesehen sein, dass der entwässerte Bestandteil und/oder das Prozesswasser einer Behandlung zur Verminderung von einem oder mehreren Bestandteilen, insbesondere von Schwermetallen (z.B. durch eine Schwermetallfällung), unterzogen wird, um den Gehalt des Abgases und/oder des Materials an diesen Bestandteilen gering zu halten.

In einer weiterhin bevorzugten Ausführungsform des erfindungsgemäßen Verfahrens kann vorgesehen sein, dem Teilstrom des Abgases vor dem Filtern ein Kühlmedium, beispielsweise Frischluft, zuzuführen. Dadurch kann erreicht werden, dass in dem Teilstrom des Abgasstroms enthaltenes Chlor abgeschieden und an in dem Teilstrom mitgeführten Partikeln eingebunden wird, was dessen Filterung ermöglicht. Zum anderen wird durch das Abkühlen des Teilstroms dessen Handhabung vereinfacht.

Die Erfindung wird nachfolgend anhand eines in der Zeichnung dargestellten Ausführungsbeispiels näher erläutert. In der Zeichnung zeigt:

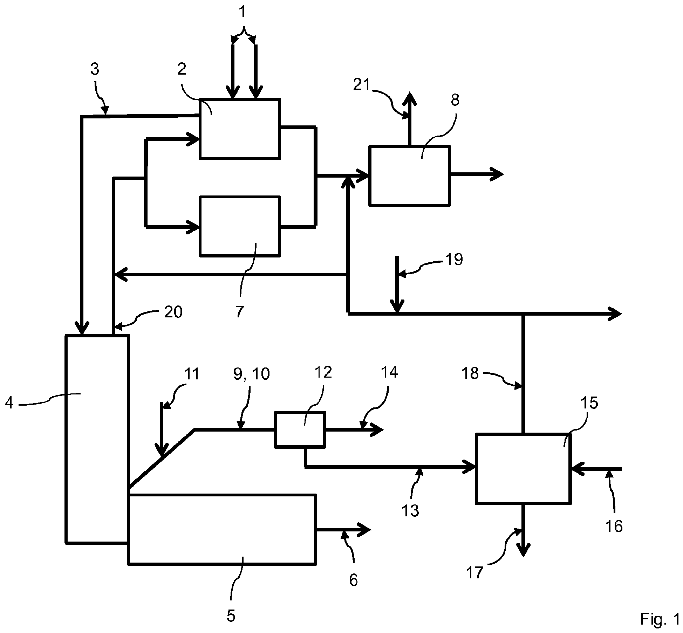

- Fig. 1:: in schematischer Darstellung die Durchführung eines erfindungsgemäßen Verfahrens und eine dabei eingesetzte Anlage.

Die in der Fig. 1 schematisch dargestellte Anlage dient der Herstellung von Zementklinker, der nachfolgend noch mit Zusatzstoffen vermischt und in einer Zementmühle (nicht dargestellt) zu Zement vermahlen werden kann.

Für die Herstellung des Zementklinkers werden Rohmaterialien 1 in einer Rohmühle 2 gemahlen. Das so erzeugte Rohmehl wird, nach einer Zumischung von Zusatzstoffen (beispielsweise Filterstaub) und dann als Ofenmehl 3 bezeichnet, gegebenenfalls in einem Silo (nicht dargestellt) zwischengelagert und anschließend einem Vorwärmer 4 zugeführt, in dem dieses vorgewärmt wird. Das vorgewärmte Ofenmehl 3 wird anschließend in einen Klinkerofen 5 überführt, der beispielsweise als Drehrohrofen ausgebildet sein kann. In dem Klinkerofen 5 wird das Ofenmehl 3 zu Zementklinker 6 gebrannt. Das dabei freigesetzte Abgas (bzw. ein Hauptstrom 20 davon) durchströmt den Vorwärmer 4 in Gegenstromrichtung zu dem Ofenmehl 3, um dieses vorzuwärmen. Anschließend wird der Hauptstrom 20 des Abgasstroms durch einen Kühlturm 7 und/oder die Rohmühle 2 geführt. Im sogenannten Direktbetrieb, in dem die Rohmühle 2 nicht im Betrieb ist und das Ofenmehl 3 dem Silo entnommen wird, wird der Hauptstrom 20 des Abgasstroms in der Regel ausschließlich über den Kühlturm 7 geführt. Im sogenannten Verbundbetrieb strömt dagegen zumindest ein Teil des Hauptstroms über die Rohmühle 2, um die Rohmaterialien 1 zu trocknen.

Der aus dem Kühlturm 7 und/oder der Rohmühle 2 austretende Abgasstrom wird anschließend über einen Abgasfilter 8 geführt, um diesen zu entstauben, wobei auch eine Verminderung des Schadstoffgehalts erfolgt.

Der Hauptstrom 20 des Abgasstroms wird infolge eines Übergangs von Wärmeenergie auf das Ofenmehl 3 im Vorwärmer 4 abgekühlt. Dadurch wird Chlor, das im Klinkerofen 5 und in einer oder mehreren unteren Stufen des beispielsweise als mehrstufiger Zyklonvorwärmer ausgebildeten Vorwärmers 4 noch im Wesentlichen gasförmig vorliegt, abgeschieden und in das Ofenmehl 3 eingebunden. Über das Ofenmehl 3 gelangt das Chlor dann wieder in den Klinkerofen 5. Der so ausgebildete Chlorkreislauf wird über einen Abgasbypass 9 entlastet.

Der Abgasbypass 9 geht im Bereich des Ofeneinlaufs ab, wodurch ein über den Abgasbypass 9 geführter Teilstrom 10 des Abgasstroms bei der Abzweigung aus dem Abgasstrom noch eine Temperatur aufweist, bei der das Chlor im Wesentlichen gasförmig vorliegt und folglich auch noch nicht abgeschieden und in das Ofenmehl 3 eingebunden worden ist.

Der abgezweigte Teilstrom 10 des Abgasstroms wird mit Frischluft 11 vermischt. Dadurch wird der Teilstrom 10 so weit abgekühlt, dass es zu einem Abscheiden des Chlors und gegebenenfalls anderer Schadstoffe, beispielsweise von Alkalien und Quecksilber, und einer Einbindung des Chlors, der Alkalien und des Quecksilbers an Feststoffpartikeln von in dem Teilstrom 10 des Abgasstroms mitgeführtem Staub kommt. Der Staub besteht im Wesentlichen aus Partikeln (im Wesentlichen bereits gesintertes Ofenmehl), die in dem Vorwärmer 4 bei der Durchströmung mittels des Abgasstroms mitgerissen wurden. Ein wesentlicher Bestandteil des Ofenmehls 3 und damit des Staubs ist Calcium.

Der Teilstrom 10 des Abgasstroms wird anschließend über einen Filter 12 geführt, um diesen zu entstauben. Der dabei anfallende Filterkuchen 13 enthält wegen der zuvor erfolgten Abscheidung des Chlors, der Alkalien und gegebenenfalls des Quecksilbers auch diese Schadstoffe.

Der gefilterte Teilstrom 14 des Abgasstroms kann noch weiter behandelt, weiter genutzt und/oder in die Atmosphäre abgeblasen werden.

Der Filterkuchen 13 wird einer Aufbereitung 15 zugeführt. Dabei wird dieser mit Wasser 16 vermischt und anschließend entwässert. Dadurch wird ein entwässerter Bestandteil 17 sowie ein Prozesswasser 18 gewonnen, das auch den mehrheitlichen Anteil des eingetragenen Chlors (wegen der guten Wasserlöslichkeit von Chlor) enthält.

Der entwässerte Bestandteil 17 kann wiederverwendet werden und dazu beispielsweise gemeinsam mit den Rohmaterialien in die Rohmühle 2 aufgegebenen werden oder dem fertigen Produkt in einer Zementmühle (nicht dargestellt) beigemischt werden.

Das chlorhaltige Prozesswasser 18 wird zumindest teilweise nach einer optionalen Zugabe von Calciumhydroxid als Zuschlagstoff in den aus dem Vorwärmer 4 ausgetretenen Hauptstrom 20 des Abgasstroms eingebracht. Ein nicht als chlorhaltiger Zuschlagstoff genutzter Teil des Prozesswassers 18 kann dagegen weiter behandelt, aus dem Prozess ausgeschleust und entsorgt werden.

Ein Einbringen des Prozesswassers 18 in den Hauptstrom 20 des Abgasstroms kann sowohl stromauf als auch stromab der Rohmühle 2 und des Kühlturms 7 erfolgen. Im Direktbetrieb der Anlage erfolgt ein Einbringen des mit dem Calciumhydroxid (in einer Nutzung als calciumhaltiger Zuschlagstoff 19) vermischten Prozesswassers 18 ganz oder zu einem Großteil stromauf oder stromab des Kühlturms 7. Das in dem Hauptstrom 20 des Abgases enthaltene Schwefeldioxid und Schwefeltrioxid reagiert mit dem Calcium des Calciumhydroxids zu Calciumsulfit und Calciumsulfat, die anschließend an dem Abgasfilter 8 der Anlage abgeschieden werden. Das über das Prozesswasser 18 in den Hauptstrom 20 des Abgasstroms eingebrachte Chlor erhöht dabei aufgrund seiner hygroskopischen Eigenschaften den Abscheidegrad für Schwefel. Gleiches gilt für den Abscheidegrad für Quecksilber, da es eine Oxidation von elementarem Quecksilber zu Quecksilberchlorid bewirkt, dessen Neigung zur Absorption an Feststoffpartikeln gegenüber elementarem Quecksilber erhöht ist.

Im Verbundbetrieb der Anlage ist ein teilweises Einbringen des Prozesswasser 18 (dann gegebenenfalls auch ohne Zusatz von Calciumhydroxid 19) stromauf (bezogen auf die Strömungsrichtung des Hauptstroms 20) der Rohmühle 2 vorgesehen. Der so erhöhte Chlorgehalt im Hauptstrom 20 des Abgasstroms bewirkt ein zusätzliches (verbessertes) Abscheiden von Schwefel und Quecksilber aus dem Hauptstrom 20 des Abgasstroms und ein Einbinden in die Rohmaterialen 1 im Rahmen der Trocknung in der Rohmühle 2.

Ein in dem Abgasfilter 8 anfallender Filterkuchen 21 wird bevorzugt zumindest teilweise aus dem Prozess ausgeschleust. Ein Chlor- und/oder Quecksilberkreislauf im Verfahren wird dadurch verhindert oder entlastet.

### Bezugszeichen:

- 1.: Rohmaterial
- 2.: Rohmühle
- 3.: Ofenmehl
- 4.: Vorwärmer
- 5.: Klinkerofen
- 6.: Zementklinker
- 7.: Kühlturm
- 8.: Abgasfilter
- 9.: Abgasbypass
- 10.: Teilstrom des Abgasstroms
- 11.: Frischluft
- 12.: Filter
- 13.: Filterkuchen des Filters
- 14.: gefilterter Teilstrom des Abgasstroms
- 15.: Aufbereitung
- 16.: Wasser
- 17.: entwässerter Bestandteil
- 18.: Prozesswasser
- 19.: calciumhaltiger Zuschlagstoff
- 20.: Hauptstrom des Abgasstroms
- 21.: Filterkuchen des Abgasfilters

## Patentansprüche

1. Verfahren zur Verminderung eines Schadstoffgehalts eines bei einer thermischen Behandlung eines Materials entstehenden oder genutzten chlorhaltigen Abgasstroms, wobei der Schadstoff in Form von Schwefel und/oder Quecksilber vorliegt und wobei
- der Abgasstrom in einen Hauptstrom (20) und einen Teilstrom (10) geteilt wird,
- zumindest ein Teil des Chlors aus dem Hauptstrom (20) abgeschieden wird, und
- anschließend der Gehalt des Schadstoffs in dem Hauptstrom (20) durch Abscheidung verringert wird, wobei
- in den Hauptstrom (20) ein chlorhaltiger Zuschlagstoff eingebracht wird, um eine Erhöhung des Abscheidegrads bei der Abscheidung des Schadstoffs zu erreichen,
**dadurch gekennzeichnet, dass** der Teilstrom (10) gefiltert wird, wobei ein bei der Filterung aus dem Teilstrom (10) abgeschiedener Filterkuchen (13) zumindest teilweise als chlorhaltiger Zuschlagstoff genutzt wird.

2. Verfahren gemäß Anspruch 1, **dadurch gekennzeichnet, dass** das Abscheiden des Chlors aus dem Hauptstrom (20) aus einer im Rahmen der thermischen Behandlung des Materials erfolgenden Abkühlung des Hauptstroms (20) resultiert.

3. Verfahren gemäß Anspruch 1 oder 2 zur Verminderung des Schwefelgehalts des Abgases, **dadurch gekennzeichnet, dass** durch ein Einbringen eines calciumhaltigen Zuschlagstoffs (19) in den Abgasstrom eine Reaktion von Schwefeldioxid und/oder Schwefeltrioxid im Abgasstrom zu Calciumsulfit und/oder Calciumsulfat ermöglicht wird und anschließend das Calciumsulfit und/oder Calciumsulfat aus dem Abgasstrom gefiltert wird.

4. Verfahren gemäß einem der vorhergehenden Ansprüche zur Verminderung des Quecksilbergehalts des Abgases, **dadurch gekennzeichnet, dass** durch das Einbringen des chlorhaltigen Zuschlagstoffs eine Reaktion von Quecksilber zu Quecksilberchlorid bewirkt wird und das Quecksilberchlorid aus dem Abgasstrom gefiltert wird.

5. Verfahren gemäß einem der vorhergehenden Ansprüche, **dadurch gekennzeichnet, dass** der Filterkuchen (13) in einen Feinanteil und einen Grobanteil separiert wird, wobei der Feinanteil zumindest teilweise wieder dem Hauptstrom (20) des Abgasstroms zugeführt wird.

6. Verfahren gemäß einem der vorhergehenden Ansprüche, **dadurch gekennzeichnet, dass** der Filterkuchen (13) zumindest teilweise mit Wasser (16) behandelt wird.

7. Verfahren gemäß Anspruch 6, **dadurch gekennzeichnet, dass** der wässerige Filterkuchen (13) entwässert wird, um daraus einen entwässerten Bestandteil (17) und chlorhaltiges Prozesswasser (18) zu gewinnen, wobei das Prozesswasser (18) zumindest teilweise als chlorhaltiger Zuschlagstoff dem Hauptstrom (20) des Abgasstroms zugeführt wird.

8. Verfahren gemäß Anspruch 7, **dadurch gekennzeichnet, dass** dem dem Hauptstrom (20) des Abgasstroms zugeführten Prozesswasser (18) ein calciumhaltiger Zuschlagstoff (19) zugesetzt wird.

9. Verfahren gemäß Anspruch 7 oder 8, **dadurch gekennzeichnet, dass** der entwässerte Bestandteil (17) mit dem Material vermischt wird.

10. Verfahren gemäß einem der Ansprüche 7 bis 9, **dadurch gekennzeichnet, dass** der entwässerte Bestandteil (17) und/oder das Prozesswasser (18) einer Behandlung zur Verminderung, Trennung und/oder Aufkonzentration von einem oder mehreren Bestandteilen unterzogen wird.

11. Verfahren gemäß einem der vorhergehenden Ansprüche, **dadurch gekennzeichnet, dass** der chlorhaltige Zuschlagstoff vor einem Abgasfilter (8) in den Hauptstrom (20) des Abgasstroms eingebracht wird und ein in dem Abgasfilter (8) anfallender Filterkuchen (21) zumindest teilweise ausgeschleust wird.

12. Verfahren gemäß einem der vorhergehenden Ansprüche, **dadurch gekennzeichnet, dass** im Rahmen einer Zementklinkerherstellung Ofenmehl (3) vorgewärmt und zu Zementklinker (6) gebrannt wird, wobei ein hinsichtlich des Schadstoffgehalts zu vermindernder chlorhaltiger Abgasstrom, der bei dem Brennen des Zementklinkers (6) entsteht, zur Vorwärmung des Ofenmehls (3) genutzt wird.

13. Verfahren gemäß einem der vorhergehenden Ansprüche, **dadurch gekennzeichnet, dass** im Rahmen einer Zementklinkerherstellung ein oder mehrere Rohmaterialien (1) zu Ofenmehl (3) verarbeitet werden, wobei ein hinsichtlich des Schadstoffgehalts zu vermindernder chlorhaltiger Abgasstrom zum Trocknen der Rohmaterialien (1) im Rahmen der Verarbeitung zum Ofenmehl (3) genutzt wird.

## Claims

1. Process for decreasing content of a harmful substance of a chlorine-containing off-gas stream formed or used in a thermal treatment of a material, wherein the harmful substance is present in the form of sulphur and/or mercury and wherein
- the off-gas stream is divided into a main stream (20) and a substream (10),
- at least some of the chlorine is separated off from the main stream (20), and
- the content of the harmful substance is then lowered in the main stream (20) by separation, wherein
- a chlorine-containing additive is introduced into the main stream (20) in order to achieve an increase in the degree of separation in the separation of the harmful substance,
**characterized in that** the substream (10) is filtered, wherein a filter cake (13) separated from the substream (10) in the filtration is used at least in part as chlorine-containing additive.

2. Process according to Claim 1, **characterized in that** the separation of the chlorine from the main stream (20) results from a cooling of the main stream (20) proceeding in the context of the thermal treatment of the material.

3. Process according to Claim 1 or 2 for decreasing the sulphur content of the off-gas, **characterized in that** a reaction of sulphur dioxide and/or sulphur trioxide in the off-gas stream to form calcium sulphite and/or calcium sulphate is permitted by introducing a calcium-containing additive (19) into the off-gas stream, and then the calcium sulphite and/or calcium sulphate is filtered off from the off-gas stream.

4. Process according to any one of the preceding claims for decreasing the mercury content of the off-gas, **characterized in that** a reaction of mercury to form mercury chloride is effected by the introduction of the chlorine-containing additive, and the mercury chloride is filtered off from the off-gas stream.

5. Process according to any one of the preceding claims, **characterized in that** the filter cake (13) is separated into a fine fraction and a coarse fraction, wherein the fine fraction is fed at least in part back to the main stream (20) of the off-gas stream.

6. Process according to any one of the preceding claims, **characterized in that** the filter cake (13) is treated at least in part with water (16).

7. Process according to Claim 6, **characterized in that** the aqueous filter cake (13) is dewatered in order to obtain therefrom a dewatered constituent (17) and chlorine-containing process water (18), wherein the process water (18) is fed at least in part as chlorine-containing additive to the main stream (20) of the off-gas stream.

8. Process according to Claim 7, **characterized in that** a calcium-containing additive (19) is added to the process water (18) fed to the main stream (20) of the off-gas stream.

9. Process according to Claim 7 or 8, **characterized in that** the dewatered constituent (17) is mixed with the material.

10. Process according to any one of Claims 7 to 9, **characterized in that** the dewatered constituent (17) and/or the process water (18) is subjected to a treatment for decreasing, separating and/or concentrating one or more constituents.

11. Process according to any one of the preceding claims, **characterized in that** the chlorine-containing additive is introduced into the main stream (20) of the off-gas stream upstream of an off-gas filter (8) and a filter cake (21) produced in the off-gas filter (8) is at least in part ejected.

12. Process according to any one of the preceding claims, **characterized in that**, in the context of cement clinker production, kiln meal (3) is preheated and fired to form cement clinker (6), wherein a chlorine-containing off-gas stream which is to be decreased with respect to the harmful substance content and is formed during the firing of the cement clinker (6) is used for preheating the kiln meal (3).

13. Process according to any one of the preceding claims, **characterized in that**, in the context of cement clinker production, one or more raw materials (1) are processed to form kiln meal (3), wherein a chlorine-containing off-gas stream which is to be decreased with respect to the harmful substance content is used for drying the raw materials (1) in the context of processing to form kiln meal (3).

## Revendications

1. Procédé de réduction d'une teneur en substance nocive d'un courant de gaz d'échappement contenant du chlore formé ou utilisé lors d'un traitement thermique d'un matériau, la substance nocive se présentant sous la forme de soufre et/ou de mercure, et
- le courant de gaz d'échappement étant divisé en un courant principal (20) et un courant partiel (10),
- au moins une partie du chlore étant séparée du courant principal (20), puis
- la teneur de la substance nocive dans le courant principal (20) étant réduite par séparation,
- un additif contenant du chlore étant introduit dans le courant principal (20) afin d'obtenir une élévation du degré de séparation lors de la séparation de la substance nocive,
**caractérisé en ce que** le courant partiel (10) est filtré, un gâteau de filtration (13) séparé du courant partiel (10) lors de la filtration étant au moins partiellement utilisé en tant qu'additif contenant du chlore.

2. Procédé selon la revendication 1, **caractérisé en ce que** la séparation du chlore du courant principal (20) résulte d'un refroidissement du courant principal (20) qui a lieu dans le cadre du traitement thermique du matériau.

3. Procédé selon la revendication 1 ou 2 pour la réduction de la teneur en soufre du gaz d'échappement, **caractérisé en ce qu'**une introduction d'un additif contenant du calcium (19) dans le courant de gaz d'échappement permet une réaction de dioxyde de soufre et/ou de trioxyde de soufre dans le courant de gaz d'échappement en sulfite de calcium et/ou sulfate de calcium, puis le sulfite de calcium et/ou le sulfate de calcium sont filtrés du courant de gaz d'échappement.

4. Procédé selon l'une quelconque des revendications précédentes pour la réduction de la teneur en mercure du gaz d'échappement, **caractérisé en ce que** l'introduction de l'additif contenant du chlore réalise une réaction de mercure en chlorure de mercure, et le chlorure de mercure est filtré du courant de gaz d'échappement.

5. Procédé selon l'une quelconque des revendications précédentes, **caractérisé en ce que** le gâteau de filtration (13) est séparé en une fraction fine et une fraction grossière, la fraction fine étant au moins partiellement réintroduite dans le courant principal (20) du courant de gaz d'échappement.

6. Procédé selon l'une quelconque des revendications précédentes, **caractérisé en ce que** le gâteau de filtration (13) est au moins partiellement traité avec de l'eau (16).

7. Procédé selon la revendication 6, **caractérisé en ce que** le gâteau de filtration aqueux (13) est déshydraté, afin d'obtenir à partir de celui-ci un constituant déshydraté (17) et une eau de procédé contenant du chlore (18), l'eau de procédé (18) étant au moins partiellement introduite dans le courant principal (20) du courant de gaz d'échappement en tant qu'additif contenant du chlore.

8. Procédé selon la revendication 7, **caractérisé en ce qu'**un additif contenant du calcium (19) est ajouté à l'eau de procédé (18) introduite dans le courant principal (20) du courant de gaz d'échappement.

9. Procédé selon la revendication 7 ou 8, **caractérisé en ce que** le constituant déshydraté (17) est mélangé avec le matériau.

10. Procédé selon l'une quelconque des revendications 7 à 9, **caractérisé en ce que** le constituant déshydraté (17) et/ou l'eau de procédé (18) sont soumis à un traitement pour la réduction, la séparation et/ou la concentration d'un ou de plusieurs constituants.

11. Procédé selon l'une quelconque des revendications précédentes, **caractérisé en ce que** l'additif contenant du chlore est introduit dans le courant principal (20) du courant de gaz d'échappement avant un filtre à gaz d'échappement (8), et un gâteau de filtration (21) formé dans le filtre à gaz d'échappement (8) est au moins partiellement évacué.

12. Procédé selon l'une quelconque des revendications précédentes, **caractérisé en ce que** de la farine de four (3) est préchauffée et brûlée en clinker de ciment (6) dans le cadre de la fabrication de clinker de ciment, un courant de gaz d'échappement contenant du chlore dont la teneur en substance nocive doit être réduite, qui se forme lors de la combustion du clinker de ciment (6), étant utilisé pour le préchauffage de la farine de four (3).

13. Procédé selon l'une quelconque des revendications précédentes, **caractérisé en ce qu'**un ou plusieurs matériaux bruts (1) sont transformés en farine de four (3) dans le cadre d'une fabrication de clinker de ciment, un courant de gaz d'échappement contenant du chlore dont la teneur en substance nocive doit être réduite étant utilisé pour le séchage des matériaux bruts (1) dans le cadre de la transformation en farine de four (3).
